# EUROPEAN PATENT APPLICATION

(11) **EP 2 172 857 A1**
(43) Date of publication of application: **07.04.2010**
(21) Application number: 08105450.4
(22) Date of filing: 26.09.2008
(51) Int. Cl.: G06F 17/50, G06F 11/36, G06F 9/46

(54) **Rapid prototyping system using multi core host computer system**

(71) Applicant: ROBERT BOSCH GMBH, 70442 Stuttgart (DE)
(72) Inventor: Wolff, Hans-Joerg, 73614, Schorndorf (DE); Strehl, Karsten, 70191 Stuttgart (DE)

(57) **Abstract**

The invention proposes a Rapid prototyping system which makes use of a multicore host computer system (100). The rapid prototyping system comprises an application core 102 and a simulation core (104). The application core (102) runs a control bench (108) which receives user commands and generates control signals to the simulation program (110). The simulation program (110) simulates the functionalities of a control system. The control system can be an electronic control unit ECU. The simulation program runs in real time. The application core (102) and simulation core (104) use the internal bus for communication between them. The simulation program communicates with external world with a set of input/output lines (114).

## Description

### State of the art

The invention relates to the field of rapid prototyping. Using multi-core host computer systems for simulation programs is known in the state of the art.

One prior art WO 2007/089271A2 discloses one such conventional simulation system.

### Advantages of the invention

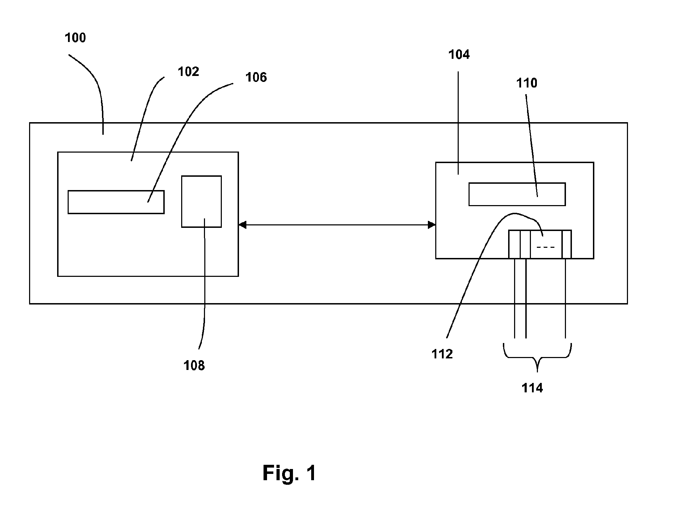

The invention with the features of the independent claims has the following advantages:
Since the simulation core is integrated in the host computer system no additional computer system is required to simulate the control system, hence less space, less weight, and less power is consumed and overall handling of the system is significantly easier.
The turn-around time decreases significantly since the download of a simulation program to a simulation core is not necessary.
Communication between the application core and simulation core becomes much faster due to the internal data bus. This results in shorter communication latencies and higher bandwidth especially for measurement and logging use cases.
Short description of the drawings
   - Figure 1: shows the rapid prototyping system according to the invention

### Detailed description of the embodiments of the invention

Figure 1 shows the rapid prototyping system according to the invention. Shown in fig. 1 is a host computer system 100 having two CPU cores 102 and 104. The CPU core 102 runs one or more application programs 106 and hence referred as application core 102. The CPU core 104 runs a simulation program 110, hence referred as simulation core 104. The application core 102 and simulation core 104 communicate with each other through an internal bus or other communication medium (e.g., shared memory). The simulation core 104 communicates with the external world using the input/output drivers 112 and the input/output lines 114 referred as I/O lines.

The application core 102 runs the control bench 108. The application core 102 may also run one or more application programs 106. The control bench 108 receives the user commands, generates control signals for the simulation program, and is responsible for execution of the experiment, for example, start of simulation, end of simulation, stopping the simulation at a predetermined point. The control bench 108 is also responsible for measuring signal and variable values, calibrating parameter values etc. required for the simulation of the control system. The simulation program 110 simulates the functionalities of a control system. The control system can be, for example, the software program of an electronic control unit (ECU).

The rapid prototyping system can simulate, for example, different functionalities of an ECU and generate different control signals. These control signals are sent out on the I/O lines 114. The control signals may be used to control an engine, or an airbag, or a safety system in the vehicle. As the actual ECU may not be available in the beginning of the project for verifying the control functions, rapid prototyping system will help the project team to develop the control functions for the ECU and run it in the rapid prototyping system. As the simulation program 110 runs on a separate simulation core 104, the real time requirements of the simulation can be met easily.

Rapid prototyping of control systems is commonly used in the industries like automotive, aviation etc. for early verification of the correct functional and real-time behaviour of the control system under development. The control strategies and algorithms for dynamic systems such as vehicles or parts of them can be tested under real time and under actual environment conditions using the rapid prototyping system much before the actual hardware or software is available.

A rapid prototyping system usually is characterized as being a hybrid hardware/software system having an interface to the external hardware through I/O lines. The simulation program 110 runs under real time conditions and may be used for open-loop and closed-loop control. It acts as a simulation node and performs a real time simulation of the control system. The simulation core 104 has the input/output drivers 112 which control the target devices like an engine, via a number of input and output (I/O) 114.

Optionally, a rapid prototyping system may be extended with an ECU bypass which is not shown in the figure. To this end, the simulation core 104 is being connected with an ECU in order to replace and simulate part or all of its functionality by the simulation program 110, while sharing input and output interfaces with each other as well as internal data. When an ECU is connected to the simulation core 104, the data or the software from the ECU can be read by the simulation program, it can be modified or used as input to simulation computations in the simulation core, the computation results can be transferred back to the ECU.

The simulation program 110 simulates the actual functional and timing behaviour of the control system under development. Controlled by the control bench 108 and based on its internal state as well as inputs received via interconnections from the I/O 114, the simulation program 104 derives subsequent internal states and sends output through I/O 114 to the outside world. This is done on a real-time basis, in order to satisfy timing constraints.

The I/O 114 represent the actual input and output being received from or sent to the physical environment of the control system under development. I/O may stand for analogue or digital quantities, temperature, pressure, communication protocols such as CAN, LIN, or Flex Ray, etc.

Recent technological developments in the computer industry enabled the transition from single-core to multi-core systems not only for highly specialized and expensive mainframe or server installations, but eventually also for low-cost and general-purpose desktop or portable notebook machines. After the introduction of multi-processor systems for high-demand desktop applications some years ago, the crucial step in this regard was the availability of first high-volume multi-core processors for mobile PC applications in early 2006 which have become the state-of-the-art hardware architecture since then.

In the context of rapid prototyping systems, multi-core host computer systems, for the first time allow the combination of the versatility of rapid prototyping with the advantages of conventional simulation. The conventional simulation is the one where the simulation of a control system is done, but not in real time. The timing issues of the control system are not handled in the conventional simulation. To this end, the approach of rapid prototyping on multi-core host computer systems being the subject of this invention, transfers the tasks of a rapid prototyping system's simulation program into the host computer system by means of exclusively assigning at least one of its multiple cores to simulation program. For a dual-core machine, this means that, one of its cores is reserved for executing the real-time simulation, while the other core performs other host activities as usual.

In the context of this invention, the term "multi-core" refers to both multi-processor systems and systems with multi-core processors, as well as combinations thereof, if not otherwise mentioned.

The multi-core architecture for rapid prototyping system resembles the merger of the conventional architectures of rapid prototyping system and a conventional simulation. As shown in Figure 1, the major component is the multi-core host with its two or more cores, to which software applications are assigned.

The application core may run an operating system as well as any number of application programs, for instance, the control bench 108 and behavioural modelling tools which are not shown in the figure. The operating system may be a standard PC operating system.

For technical reasons and depending on the concrete hardware/software architecture, a thin remainder of the PC operating system may reside on the simulation core, in addition to the actual operating system's instantiation on the application core. Particularly, this may ease inter-core communication as well as real-time triggering of the simulation program via built-in OS functionality.

For similar reasons and also dependent on the hardware/software architecture, the I/O device drivers may reside on the application core rather than or in addition to the simulation core. Like this built-in OS functionality could be used for the purpose of device integration.

In extension to the architecture depicted above, multi-core systems with three or more cores could be used. In this case, preferably more than one of the cores is being used for executing parts of the simulation program or even separate simulation programs, resulting in more than one simulation core. Consequently, not only application to simulation communication is needed but also inter-simulation communication among simulation programs residing on different cores. Inter-simulation communication is inter-core communication and allows simulation programs to send each other input and output data needed for simulation.

In case no control bench is needed for controlling the simulation program, the latter may also run in stand-alone simulation mode, e.g., automatically started without interaction by the user. Once running, the control bench may be able to connect to the simulation program, to take over control then and perform prototyping tasks, or to disconnect from it.

## Claims

1. A rapid prototyping system comprising a host computer system (100), a control bench (108) and a simulation program (110), the said control bench (108) capable of receiving user commands and generating control signals for the simulation program (110), the said simulation program (110) capable of simulating real time functionalities of a target device, **characterised by**:
- the host computer system (100) having at least two CPU cores (102, 104)
- the control bench (108) runs on one CPU core (102) of the host computer system (100) and the simulation program (110) runs on another CPU core (104) of the host computer system (100).

2. A rapid prototyping system according to claim 1 wherein the control bench (108) and simulation program (110) communicate with each other with a predefined communication mechanism.

3. A rapid prototyping system according to claim 1 wherein the simulation program (110) simulates a control system.

4. A rapid prototyping system according to claim 3 wherein the control system is an electronic control unit (ECU).

5. A rapid prototyping system according to claim 1 wherein the simulation program (110) interacts through input/output lines (114).

## Amended claims

### Amended claims in accordance with Rule 137(2) EPC.

**1.** A rapid prototyping system comprising a host computer system (100), a control bench (1 08) and a simulation program (110), the said control bench (108) capable of receiving user commands and generating control signals for the simulation program (110), the said rapid prototyping system **characterised by**
- the host computer system (100) having at least two CPU cores (102, 104)
- the control bench (108) runs on one CPU core (102) of the host computer system (100) and the simulation program (110) runs on another CPU core (104) of the host computer system (100).
- the said simulation program (110) adapted to perform real time simulation of a control system which controls a target device using a set of input/output drivers (112) and a set of input/output lines (114).

**2.** A rapid prototyping system according to claim 1 wherein the control bench (108) and simulation program (110) communicate with each other with a predefined communication mechanism.

**3.** A rapid prototyping system according to claim 1 wherein the target device is an enghine.

**4.** A rapid prototyping system according to claim 1 wherein the control system is an electronic control unit (ECU).

**5.** A rapid prototyping system according to claim 1 wherein the simulation program (110) interacts through input/output lines (114).
